Europäisches Patentamt

European Patent Office

Office européen des brevets

(11) Publication number: 0 209 369
A2

# EUROPEAN PATENT APPLICATION

(21) Application number: 86305456.5

(22) Date of filing: 16.07.86

(51) Int. Cl.⁴: **H04N 15/00** , G01N 1/06 ,
G01N 21/00

(30) Priority: 16.07.85 US 755429

(43) Date of publication of application:
**21.01.87 Bulletin 87/04**

(84) Designated Contracting States:
**AT BE CH DE FR GB IT LI LU NL SE**

(71) Applicant: **Kerschmann, Russell Lee**
**19 Garden Street nr. 65**
**Cambridge Massachusetts 02138(US)**

(72) Inventor: **Kerschmann, Russell Lee**
**19 Garden Street nr. 65**
**Cambridge Massachusetts 02138(US)**

(74) Representative: **Sheard, Andrew Gregory et al**
**Kilburn & Strode 30, John Street**
**London WC1N 2DD(GB)**

(54) **Recording visual images.**

(57) Image recording apparatus includes means for holding a block in which an object is embedded, means for cutting slices from the block to form successively deeper block faces, and visual recording means positioned to record images of the successive block faces.

EP 0 209 369 A2

## RECORDING VISUAL IMAGES

Background of the Invention

This invention relates to recording visual images of, e.g., pathology samples.

Most examination of tissue on the microscopic level is carried out by illuminating a thin tissue slice cut from the surface of a block, to give an effectively two-dimensional image. Information about three-dimensional structures in the tissue is obtained by examining and/or photographing successive slices, which are commonly mounted on glass slides. The tissue is either stained prior to embedding in the block, or mounted slices stained on the slides.

Summary of the Invention

In general, the invention features image recording apparatus including means for holding a block in which an object is embedded; means for cutting slices from the block to form successively deeper block faces; and visual recording means positioned to record images of the successive block faces.

In preferred embodiments, the visual recording means is a video camera which receives images through a microscope (preferably a fluorescence microscope) and which is connected to a computer capable of storing the images, and the apparatus includes a screen for displaying the stored images. Preferably the computer is also capable of creating on the screen a three-dimensional reconstruction of a portion of the object from the stored images. Preferably the embedded object is a piece of human or animal tissue, and the embedding process includes the use of tissue-staining dyes and/or infiltrating and/or embedding additives for providing sharper images, as is discussed in greater detail below. (As used herein, the term "staining" refers to treating tissue with a dye which associates with the tissue on a molecular level. "Infiltration" refers to treating the tissue with increasing concentrations of a substance which permeates the tissue and then hardens. "Embedding" refers to immersing the infiltrated tissue in a substance (which is usually the same as the infiltrating substance), which is then hardened to form the block; the embedding substance thus serves to provide rigid support and to facilitate the cutting process.)

The invention provides rapid, highly automated recording and storage of structural information on the internal geometry of the embedded object, without the inconvenient, time-consuming handling and storage of individual cut sections. These advantages flow from the fact that it is the image of the block face, rather than each cut section, which is recorded following each cut. Successive images can be recorded without moving the microscope; the microscope and knife can be completely stationary throughout the process. The stored images readily lend themselves to computerized image processing, e.g., three dimensional image reconstruction, useful in many applications, particularly human and veterinary pathology analysis.

Other features and advantages of the invention will be apparent from the following description of the preferred embodiments thereof, and from the claims.

Description of the Preferred Embodiments

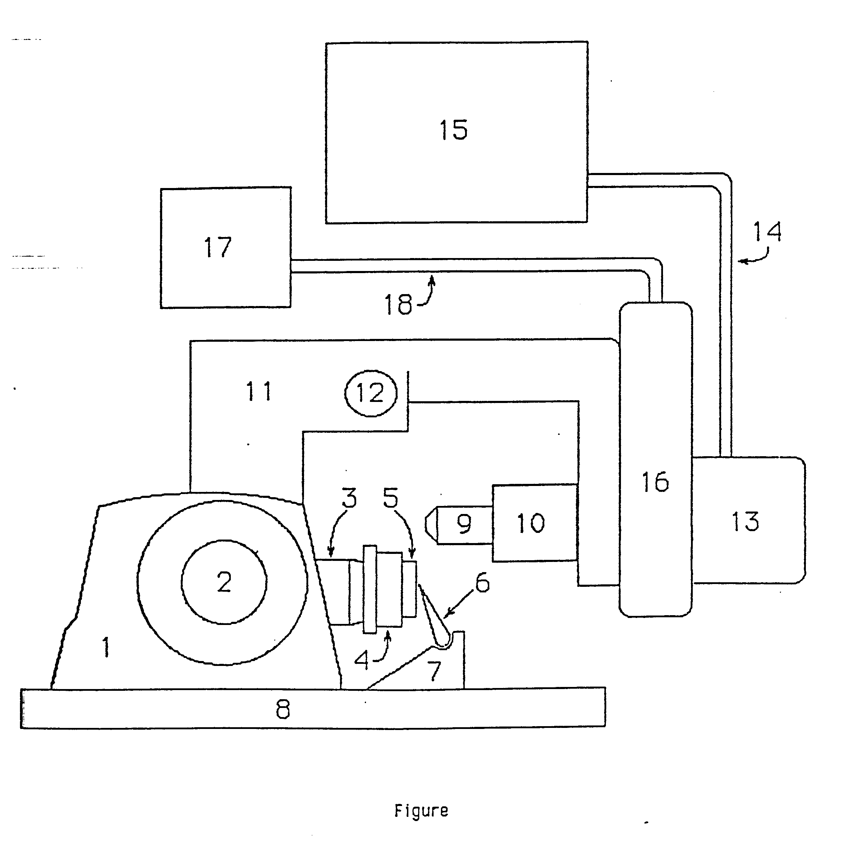

The drawing will first be described.

Drawing

The Figure is a diagramatic representation of apparatus of the invention.

Structure

Refering to the Figure, the general elements of the apparatus are the microtome components (1-8 in the Figure); the microscope components (9-12 in the Figure); the illumination system (16-18 in the Figure); and the electronic components (13-15 in the Figure)

Turning first to the microtome components, there is shown conventional microtome including base 8, body 1, motor drive 2, reciprocating bar 3, tissue block holder 4, holding tissue block 5 in its lowermost position opposite metal or glass knife blade 6, held in knife holder 7.

The microscope support arm 11 is attached to body 1 of the microtome, and to the microscope lens holder 10, which holds objective lens 9. The microscope is of the type manufactured, e.g., by American Optical Corp., in which focusing is achieved not by movement of the microscope specimen stage (there is no stage in the illustrated apparatus), but by extension or retraction of the objective lens. Focusing is by means of control knob 12. Fluorescence epiillumination light source 16 (powered by power supply 17 through connecting cable 18) is positioned to illuminate, through lens 9, the surface of block 5 when block 5 is at its uppermost position. Attached to light source 16 is video camera 13, connected via connecting cable 14 to computer 15.

Before describing the operation of the illustrated apparatus, there will be described various methods of minimizing "noise" in the form of out-of-focus images of tissue which is deeper in the block than the surface image which is being recorded; the less the deeper tissue is "visible" to the image recording means, the cleaner and more noise-free will be the recorded surface image.

## Quenching

One method of minimizing such noise, while providing tissue/block contrast, is to stain the tissue with a flourescent dye, and then infiltrate the tissue with, and include in the embedding material - (generally a plastic polymer, as discussed in more detail below), a flourescence quencher (e.g. ethyl iodide) which inhibits emission by the dye; the microscope in such a system is a fluorescence microscope which illuminates the block face at the absorbance wavelength of the flourescent dye, and views images at the emission wavelength - (generally in the visible range). The quencher inhibits excitation of the dye in the tissue deep in the block to a greater degree than the dye in the tissue at the surface, which has had some of the surrounding quencher removed by the microtome knife. Any suitable conventional fuorescence quenchers and dyes, e.g., fluorescein or Hoechst dye 33258 (discussed further below) can be used in the fluorescent dye/quencher method.

## UV Absorbance

Another noise minimization method employs compounds which absorb ultraviolet light ("UV absorbers"), in conjunction with a fluorescent dye which maximally absorbs at a wavelength near - (within 15 nm) the absorption maximum of the UV absorber. For example, the method can employ a dye which maximally absorbs at about 340 nm and a UV absorber which also maximally absorbs at about 340 nm. This system works as follows. UV light of a wavelength of 340 nm illuminates the block face and is absorbed by and excites the fluorescent dye in the tissue at the block surface. Deeper in the block, the UV absorber absorbs the UV light (to an extent which increases with increasing depth), inhibiting absorption and therefore emission by the dye deeper in the block. A suitable dye/UV absorber pair is Hoechst dye 33258 (Bisbenzimide,2'-(4-hydroxyphenyl)-5-(4-methyl-1-piperazinyl)-2,5-bi-1H-benzimidazole trihydrochloride pentahydrate), which maximally absorbs at 343 nm; and the UV absorber 2-(2'-hydroxy-5-methylphenyl)bensotriazole (described in Encyclopedia of Chemical Technology ed. Kirk-Othmer, John Wiley & Sons), which maximally absorbs at about 339 nm; the latter compound also advantageously inhibits embedding material degradation by ambient light.

## Transmittance Blocking

Another noise-minimization method involves the inclusion in the infiltration and embedding material of a dye which, unlike the quencher (which interferes with the mechanism of fluorescence emission, and the UV absorber, which blocks absorbance), blocks light transmittance in the visible range and this prevents emissions from deep in the block from reaching the surface. Black dyes are suitable for this purpose; examples are the azine dyes, e.g., induline and nigrosines, (described in Encyclopedia of Chemical Technology ed. Kirk-Othmer, John Wiley & Sons).

## Complementary Dyes

An additional noise-inhibiting method involves the use of two different fluorescent dyes, the first of which stains the tissue and emits at a wavelength which is absorbed by and excites the second, which is added to the infiltrating and embedding materials. Excitation of the first dye in tissue present at the surface of the block will simply cause the emission of light of the emission wavelengths to provide a recordable image. Excitation of the first dye in tissue deep in the block, however, results in some of the emitted light being asorbed by the second dye along the emitted light's path to the surface, reducing undesired emission from within the block. In addition, the excitation of the second dye causes light emission at a wavelength different from the emission wavelength of the first dye; the computer associated with the microscope can be programmed to subtract from the image light of this second wavelength.

## Computer Image Enhancement

Another method of reducing noise from images within the block involves enhancing the image using appropriate computer software. The ability of computer programs to enhance the surface image compared to deeper images is based on the differences in sharpness between surface and deeper images, resulting from light scattering which causes blurring within the block but not at the surface. Software for providing such processing exists and is used, e.g., for removing cloud cover from aerial photographs, as described in Lim, "Image Enhancement" in Digital Image Processing Techniques, Ekstrom, ed., Academic Press, Inc., 1984. A number of commercial companies sell image processing software, e.g., Imaging Technology Incorporated, Woburn, MA.

It may be desirable in some instances to employ several of the above-described noise reduction methods in conjunction with each other, e.g., a UV absorber, a quencher, a visible light absorber, and computerized image enhancement can all be used in the same system.

Operation

The first step in using the invention is the fixing, staining, and infiltrating/embedding of the tissue. Such tissue processing is carried out using the materials described above, according to standard en bloc staining and embedding techniques. Preferably, the embedding material is a polymeric plastic material, e.g., the methylmethacrylates commonly used in pathology tissue embedding for light microscopy.

After staining and embedding, the tissue block 5 (referring to the Figure) is inserted into tissue block holder 4 in the desired orientation, and the microtome activated to cut tissue slices from the block with knife 6 while reciprocating bar 3 moves up and down and is advanced after each cut by the automatic microtome advancing mechanism which is standard on many microtomes, by a distance corresponding to the thickness of one section. The slices cut from the block can be discarded, or some or all retained for additional processing (e.g., staining with any number of dyes) for conventional examination.

After each cut, flourescence excitation epiillumination light source 16 illuminates the surface of block 5 through lens 9, and video camera 13 records the fluorescent surface image also through lens 9, and transmits the image to computer 15 for storage and processing.

Applications

The invention provides the capacity to automatically record and store large numbers of successive tissue images, with virtually no human handling of the tissue once the block has been mounted on the microtome. The storage of the images in a computer permits software-controled manipulation of the images in a variety of ways. For example, the images of consecutive sections of the tissue will normally be stored, and the computer programmed, so that the person (e.g. pathologist) viewing the stored images can display them in rapid succession to effectively "melt" through the tissue on the display screen. In the case of a biopsy, this will result in the complete sampling of the tissue. In addition, the computer can be programmed to construct, from the stored images, a three-dimensional reconstruction of all or a portion of the tissue, and to manipulate that image by rotating it to any desired orientation and/or by choosing to view any cross-section of the reconstructed image.

The pathology applications of the invention are virtually limitless. Any tissue which was previously capable of being examined by conventional two-dimensional microscopy can be analysed using the invention.

Examples of problem pathology specimens that could be better examined, and entirely new approaches to tissue analysis possible with the invention, are:

1) Tissues containing a few very small structures which are critical in reaching a diagnosis. These could be missed by conventional histology processing due to sampling errors but would be detectable through the complete sampling feature of the invention, e.g., granulomas (sarcoid of the lung, regional enteritis), microorganisms, multinucleated giant cells (giant cell arteritis), small foci of invasion by malignant tumors (carcinoma of the uterine cervix, malignant melanoma), or small foci of metastatic tumor in lymph nodes. The capacity to use the invention to examine the entire tissue may permit the taking of smaller biopsies in some cases.

2) Specimens which demand that special attention be paid to the margins of resection to assure that no disease (e.g. malignant tumour) has been left in the patient. Basal cell carcimonas of the skin can often occur in locations (e.g., the face) where it is desirable to spare as much of the adjacent normal tissue as possible; in attempting to accomplish this, the surgeon may cut through the edge of the lesion, resulting in a specimen with tumor present at one small portion of its edge. Through sampling error, this important feature could be missed, but would be detected by the invention.

3) The diagnosis of disorders in which the orientation of the biopsy is critical. This is a recurrent problem in surgical pathology, especially when dealing with small biopsies of mucosal surfaces such as the lining of the bowel, stomach or esophagus. Only a certain plane of section through the tissue, usually one taken perpendicular to the mucosal surface, will permit estimation of the relative proportions of the various tissue components, such as the villus/crypt ratio critical in the diagnosis of non-tropical sprue in the small bowel. The capacity for the invention to rotate the image of the tissue to any desired orientation eliminates this problem.

4) A situation related to 3) in which optimal diagnosis requires views of a biopsy from two or more different aspects. Only one angle of plane of section can be sampled by conventional methods, which may force a sacrifice of information in some situations, such as in the diagnosis of alopecia from punch biopsies of the scalp where both perpendicular and transverse sections are of value. Often this problem is confronted by subjecting the patient to multiple biopsies, a situation that could be avoided by use of the invention.

5) Determination of the volume of a microscopic structure may prove to be useful in some cases, but only crude approximations are possible by current methods. For example, the amount of early invasive tumour in the uterine cervix or of the invasive component of nodular melanoma in the skin may have important prognostic significance. This measurement could be made by use of the invention and the appropriate computer software.

6) Finally, the opportunity offered by the invention to study the three-dimensional arrangement of a pathologic lesion may reveal higher level diagnostic features undetectable by conventional two-dimensional techniques.

In an image recording method according to the present invention which comprises staining the object using a first fluorescent dye characterised by a maximum absorbance wavelength and a maximum emission wavelength, it is preferred to infiltrate the object with, and embed it into, a material containing a quencher of the first fluorescent dye.

It is also preferred to infiltrate the object with, and embed it in, a material containing a dye capable of blocking the transmission of visible light through the block.

Other embodiments are within the following claims.

## Claims

1. An image recording apparatus characterised in that it comprises means (4) for holding a block - (5) in which an object is embedded, means (6,7) for cutting slices from said block to form successively deeper block faces, and visual recording means (9,10,13,15) positioned to record images of said successive block faces.

2. An apparatus as claimed in Claim 1 wherein said visual recording means comprises a video camera (13).

3. An apparatus as claimed in Claim 1 or 2 wherein said apparatus includes a screen for displaying said record images.

4. An apparatus as claimed in Claim 3 wherein said video camera is connected to a computer - (15) capable of storing said images and creating on said screen a three-dimensional reconstruction of a portion of said object from said stored images.

5. An image recording method comprising

embedding an object in a block (5) capable of being cut into slices,

cutting a plurality of slices from said block to form successively deeper block faces, and

visually recording said successively deeper block faces.

6. A method according to Claim 5 wherein said visual recording is carried out using a video camera (13).

7. A method as claimed in Claim 5 wherein said object is a piece of human or animal tissue.

8. A method as claimed in Claim 5, 6 or 7, wherein said method comprises staining said object using a first fluorescent dye characterised by a maximum absorbance wavelength and a maximum emission wavelength.

9. A method as claimed in Claim 8 wherein said method further comprises infiltrating said object with, and embedding it in, material containing a UV absorber which maximally absorbs at a wavelength near the maximum absorbance wavelength of said first fluroescent dye.

10. A method as claimed in Claim 8 wherein said method further includes infiltrating said object with, and embedding it in, material containing a second fluorescent dye characterised by a maximum absorbance wavelength near the maximum emission wavelength of said first dye.

Figure